# EUROPEAN PATENT SPECIFICATION

(11) **EP 4 377 578 B1**
(45) Date of publication and mention of the grant of the patent: **17.12.2025**
(21) Application number: 22848791.4
(22) Date of filing: 28.07.2022
(51) Int. Cl.: F16B 5/06, E04B 1/343, E04H 1/12, F16B 5/00, E04B 1/61, E04B 1/38

(54) **CONCEALED STRUCTURAL ELEMENT FASTENING SYSTEM**
VERDECKTES STRUKTURELEMENTBEFESTIGUNGSSYSTEM
SYSTÈME DE FIXATION DISSIMULÉ À ÉLÉMENTS STRUCTURAUX

(30) Priority: 28.07.2021 ZA 202105327
(43) Date of publication of application: 05.06.2024
(73) Proprietor: Hickley, Nicolaas Hendrik, 0157 Centurion (ZA)
(72) Inventor: Hickley, Nicolaas Hendrik, 0157 Centurion (ZA)
(74) Representative: Forresters IP LLP
(86) International application number: PCT/IB2022/056978
(87) International publication number: WO 2023/007414

(56) References cited:
- EP-A1- 1 283 372
- EP-A2- 0 896 103
- US-A- 2 340 864
- US-A- 2 620 525
- US-A- 4 968 105
- US-A- 5 619 826
- US-A- 6 115 971
- US-A1- 2010 212 082
- US-A1- 2017 261 022

## Description

### FIELD OF THE INVENTION

This invention relates to a fastening system for a structural element.

### BACKGROUND TO THE INVENTION

Many structures are assembled from structural elements that comprise composite materials, such as plastics. The assembly of such structures require that various elements be positioned in specific relative orientations to each other, and that they be secured in such orientations.

One example of such a structure is a portable toilet. It is comprised of structural elements including moulded plastic panels which form the base, pillars, side panels and top of the toilet. Four rectangularly shaped side panels are secured to four corner pillars by means of rivets to form an upright cubicle. Each side panel is secured to a pillar on each side thereof by means of multiple rivets, with the entire structure requiring dozens of rivets. One side panel includes a door for the toilet.

The assembled structure is not entirely stable, and typically there is some movement in it, coming from joints created using rivets. This allows some lateral movement of the panels, which is not ideal.

The assembly of such a structure requires at least a rivet gun and a supply of rivets, which is not always available on site where such assembled structures are intended to be used. This prevents, at least in some instances, such structures to be transported in flat-packed disassembled form. Instead, they are transported fully assembled, which dramatically increases transport cost and exposes such assembled structures to transport-inflicted damage.

Once the structure is assembled in this manner it cannot be easily disassembled, at least not without removing the rivets which typically requires drilling them out. That is a laborious task that may also damage the apertures through which the rivets have to be located, which compromises the future structural integrity of such a toilet when it is assembled again. This effectively renders impractical the disassembly of such a structure once it has been assembled.

This limitation is not applicable only to portable toilets. By way of further example, some tool sheds are also manufactured from moulded composite materials to form structural elements for assembly. These also typically have side panels and corner pillars that form walls of the structure.

The same also applies to structures such as portable huts, and low-cost structures that are typically not transported very often between locations where they are used, for example guard huts, and small cabins colloquially known as Wendy-houses. Although some of these structures were historically manufactured from wood, there are modern variants of them that are made from plastic panels, and they also suffer from the problems described above.

Even though structures of the type described above are intended to be used as relatively low-cost functional units, they must still be aesthetically pleasing, especially where both sides of their panels are visible. Therefore, such structural elements are generally expected, in terms of moulding, to have "A" surface finishes on both sides thereof. This also means, from an aesthetic perspective, that ideally such structural elements should not have unsightly visible braces, or the like, that serve as fasteners between adjoining structural elements.

The prior art includes patent US 2 340 864 ("Carpenter") relating to *fastening means for building construction*, which discloses fastening means to secure together two members in building construction by means of a lock bar fitting within opposed apertures in adjacent end faces of members to be joined. Carpenter relies on eccentric rotation to provide an over-centre lock, which means it is either locked or unlocked, and it is unlocked until the over-centre position is reached.

There is a need for a structural element fastening system that at least partly overcomes these problems and provides a neat and structurally sound assembled product.

### OBJECTIVE OF THE INVENTION

It is an objective of the invention to provide a structural element fastening system which at least partly overcomes the abovementioned problems.

### SUMMARY OF THE INVENTION

In accordance with this invention there is provided a concealed structural element fastening system according to claim 1.

There is further provided for the engagement formation of each of the fastener side tabs to comprise an aperture through the tab, and for the engagement formation of the second structural element to comprise a hook; alternatively, for the engagement formation of each of the fastener side tabs to comprise a hook extending from the tab, and for the engagement formation of the second structural element to comprise an aperture in a tab extending from the second structural element.

There is further provided for the passage to extend through the outer wall of the first structural element.

There is also provided for the first and second structural elements to include a sliding fit guide comprising a set of spaced apart ribs on one of the first and second structural elements, and a set of complementary notches on the other, with the ribs and notches guiding sliding of the edge of the second structural element into the groove of the first structural element.

There is further provided for the first structural element comprise a pillar and for the second structural element to comprise a panel, and more preferably for the pillar to comprise a corner pillar of a structure and for the panel to comprise a wall of the structure, and further preferably for each pillar to provide fitment of a panel on either longitudinal side thereof.

According to a further aspect of the invention, there is provided a concealed structural element fastening according to claim 9.

These and other features of the invention are described in more detail below.

### BRIEF DESCRIPTION OF THE DRAWINGS

Two embodiments of the invention are described by way of example only and with reference to the accompanying drawings in which:
- Figure 1: is a front orthographic view of part of assembly according to a first embodiment of the invention, including a corner pillar of a portable toilet, shown with part of a wall panel engaged with it on either side thereof;
- Figure 2: is a front orthographic view of a fastener forming part of the assembly of Figure 1;
- Figure 3: is a top right orthographic view of the pillar shown in Figure 1 without the wall panels and the fastener of Figure 2;
- Figure 4: shows the pillar of Figure 3 with the fastener of Figure 2, and excluding the wall panels;
- Figure 5: is a bottom orthographic view of the pillar shown in Figure 4;
- Figure 6: is a bottom orthographic view of the left wall panel of the assembly of Figure 1;
- Figure 7: is a bottom orthographic view of the left panel of the assembly of Figure 1, with the fastener of Figure 2;
- Figure 8: is a bottom orthographic view of the assembly of Figure 1;
- Figure 9: is a front orthographic view of part of an assembly according to a second embodiment of the invention including a side pillar of a portable toilet, shown with part of a wall panel engaged with it on either side thereof;
- Figure 10: is a front orthographic view of a fastener forming part of the assembly of Figure 9;
- Figure 11: is a left side orthographic view of the side pillar of the assembly of Figure 9, with the fastener of Figure 10;
- Figure 12: is a front orthographic view of the left side panel of the assembly of Figure 9, with the fastener of Figure 10; and
- Figure 13: is a bottom orthographic view of the assembly of Figure 9.

### DETAILED DESCRIPTION OF THE INVENTION

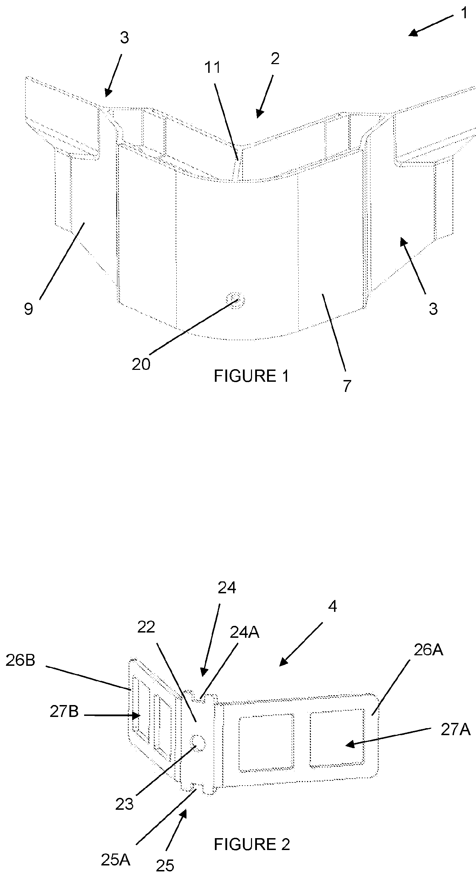

A first embodiment of a concealed structural element fastening system according to the invention is shown in Figures 1 to 8.

The fastening system (1) includes a first structural element (2), a second structural element (3) and a fastener (4). In this first embodiment, the first structural element comprises a corner pillar (2) of a portable toilet, and the second structural element comprises a sidewall (3) of the portable toilet. In Figure 1 two sidewalls (3) are shown.

The portable toilet includes four of the corner pillars (2), three sidewalls (3), and a door (not shown). The panel that includes the door, is secured to its adjoining pillars (2) in the same manner as the three other sidewalls (3).

For the sake of simplicity, the drawings show only a portion of one corner pillar (2) with or without its two adjoining sidewalls (3). It will be appreciated that the corner pillar (2) has a length determined by the desired height of the portable toilet, and the two sidewalls (3) have complementary lengths, and each sidewall has a width determined by its function.

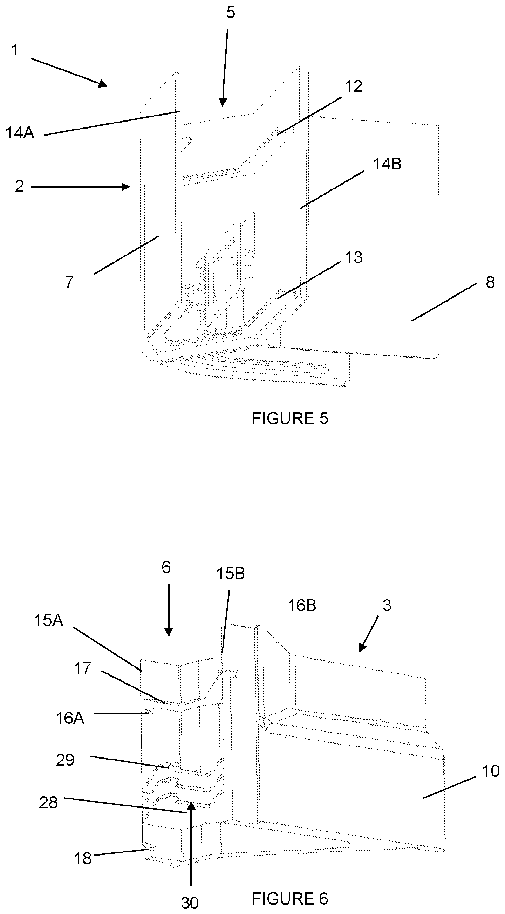

To assemble the portable toilet, a longitudinal edge (6) of a sidewall (3), shown in Figure 6, is slid into a complementary sized longitudinal groove (5) in each side of the pillar (2), with one sidewall (3) on each side of the pillar (2). The opposing longitudinal edge (not shown) of each sidewall (3) is slid into a similar pillar (2), with four pillars (2) and four sidewalls (3), one of which includes the door, completing the vertical assembly of the portable toilet. The portable toilet structural assembly is completed by securing this vertical assembly on a floor panel and securing a roof panel to its top.

It will be appreciated that the integrity of the portable toilet depends to a large degree on the engagement between the pillars (2) and sidewalls (3), even though the floor panel and roof panel off the toilet also assist in structural stability. Each pillar (2) is provided with a fastening system (1) according to the invention in a plurality of locations along the length of the pillar, with corresponding features along the edges of the sidewalls (3). Typically, four or five fastening systems are spaced along the length of each pillar (2).

Each pillar (2) includes an external surface (7) and an internal surface (8). Similarly, each sidewall (3) includes a complementary external surface (9) and a complementary internal surface (10).

The external (7) and internal (8) surfaces of the pillar (2) is divided by a central internal wall (11), the width of which determines the thickness of the pillar (2).

The operative outside of the external surfaces (7, 9) and the internal surfaces (8, 10) are provided with "A" grade (high quality) surface finishes, since these are visible.

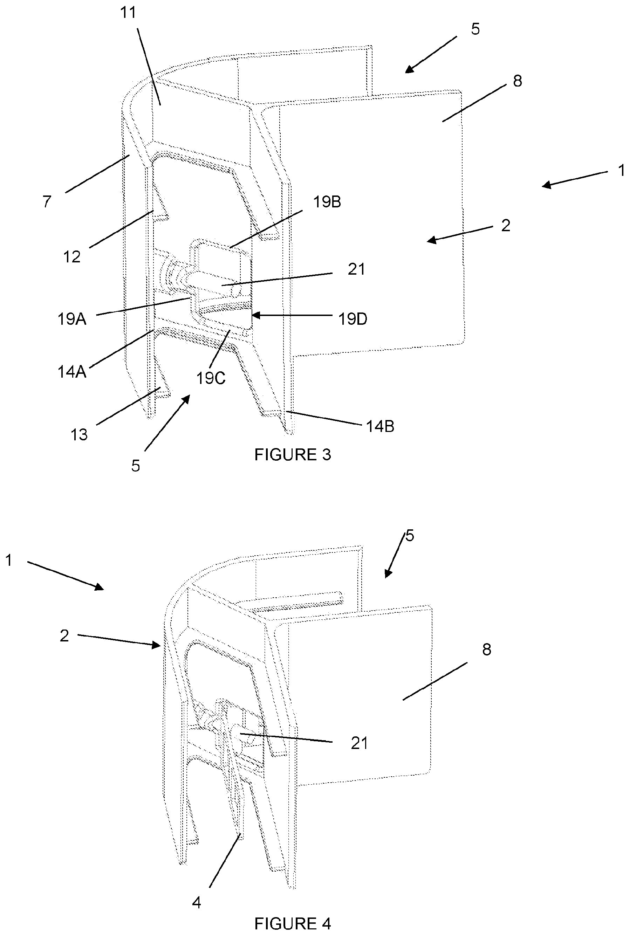

Each pillar (2) is provided, on each side of a central internal wall (11), with a set of spaced apart ribs (12, 13), with one (12) above and another (13) below the fastener element position (4) of the system (1). As shown most clearly in Figures 3 to 6, the ribs (12, 13) each terminate at a predetermined distance inward from the longitudinal edges (14A, 14B) of the pillar (2).

The longitudinal edge (15) of each sidewall (3) comprises two spaced apart edges (15A, 15B), which are complementary shaped to the groove (5) formed by the inner surfaces of the longitudinal edges (14A, 14B) of the pillar (2). This allows the edges (15) of the sidewall (3) to slide into the groove (5) between the internal (8) and external (7) surfaces of the pillar (2) edge.

Each of the sidewall edges (15) also has formations complementary shaped and sized to the set off spaced apart ribs (12, 13) between the internal (8) and external (7) surfaces of the pillar edge (2). These formations include a set of notches (16A, 16B) above the position of the fastener (4) and a rib (17) located above the notches (16A, 16B). In use the notches (16A, 16B) engage the ends of the upper rib (12) in a side of the pillar (2) edge, and the rib (17) in the sidewall slides over the upper rib (12) of that pillar (2) edge. The outer edge (15A) of the sidewall (3) is also provided with a notch (18) located in a position that is aligned with the lower rib (13) of the pillar (2) edge. In use the notch (18) engages the end of the lower rib (13) in the side of the pillar (2) edge. It will be appreciated that if required for stability, the inner edge (15B) may also be provided with a notch to engage the end of the lower rib (13) in the side of the pillar (2) edge.

This arrangement allows the longitudinal edge (15) of each sidewall (3) to be slid into the groove (5) formed between the inner surfaces of the longitudinal edge (14) of the pillar (2). The abovementioned engagement of notches (16, 18) and ribs (12, 13, 17) guides each sidewall (3) into the correct position relative to the pillar (2).

The central internal wall (11) of the pillar (2) includes an aperture (19) and a passage (20) extending from the edge (19A) of the aperture closest to the external (7) surface of the pillar (2), through the external surface (7) of the pillar (2). The passage (20) is shaped and sized to allow a cap screw (21) to partly extend from the external surface (7) of the pillar (2) through the passage (20) into the aperture (19) in the internal wall (11) of the pillar (2). The head of the cap screw (21) is contained within a recessed space sized to it, with the narrower passage preventing the head from moving deeper into the pillar (2) and providing a bearing surface for the cap screw to be tightened against.

The system includes a fastener (4) as shown in Figure 2. The fastener (4) is manufactured from a plastics material and has a rectangular base (22) with a central aperture (23) complementary shaped to the shaft of the cap screw (21). The central aperture (23) is screw threaded complementary to the thread of the cap screw (21). This is achieved by providing a screw thread in the aperture (23), alternatively by securing a nut (not shown) with a complimentary screw thread to the base (22) coaxial with the central aperture (23).

The base (22) terminates at its top and bottom in top and bottom edges, each of which is provided with a set of spaced apart protrusions (24, 25), which form the fastener guide. Each set of spaced apart protrusions define between them a gap (24A, 25A), that has a width complementary to the thickness of the internal wall (11) of the pillar (2) around the aperture (19), which provides the engagement path (19B, 19C) for the fastener (4).

The base (22) extends on each of its sides into a tab (26A, 26B). The tabs (26) each extend at 45 degrees relative to the plane of the base (22), to arrange the tabs (26) at 90 degrees relative to each other. Each tab (26) terminates in and end that is provided with a closed aperture (27A, 27B).

Each sidewall (3) includes between its spaced apart notches (16, 18) a hook in the form of three ribs (28) each of which terminates in an end that is formed into a hook (29). The hook formations (29) each has a gap (30) that is complementary to the thickness of the tab (26) of a fastener (4) and the shape and size of its closed aperture (27).

In this first embodiment the open side of the hooks (29) are directed towards the side of the sidewall (3) which is operatively located on the inside of the portable toilet. It will be appreciated this could be reversed, with suitable functional modifications.

The base of the fastener (22) is locatable within the aperture (19) in the internal wall (11) off the pillar. The shaft of the cap screw (21) is extended through the passage (20) and through the central aperture (23) of the fastener (4) to engage the cap screw (21) with the fastener (4). The fastener (4) is arranged with its spaced apart protrusions (24, 25) on either side of the top and bottom edges (19B, 19C) of the aperture (19) in the internal wall (11).

Rotation of the cap screw (21) moves the base of the fastener (4) between the inner (19D) and outer (19A) vertical edges of the central aperture (19), guided by the protrusions (24A, 25A) along the top (19B) and bottom (19C) edges of the aperture (19). This provides an engagement path (19B 19C) between the inner (19D) and outer (19A) vertical edges of the central aperture (19) for the fastener (4). In this embodiment the engagement path (19D - 19A) is aligned at 45 degrees to the sliding engagement of the sidewalls (3) into the pillar (2).

In this embodiment the fastener (4) has a disengaged position which is at the point where its base (22) is located proximate the vertical edge (19D) of the aperture (19) closest to the operative inside of the portable toilet. The fastener (4) has an engaged position at the point where the base (22) is located proximate the vertical edge (19A) of the aperture (19) closest to the operative outside of the portable toilet.

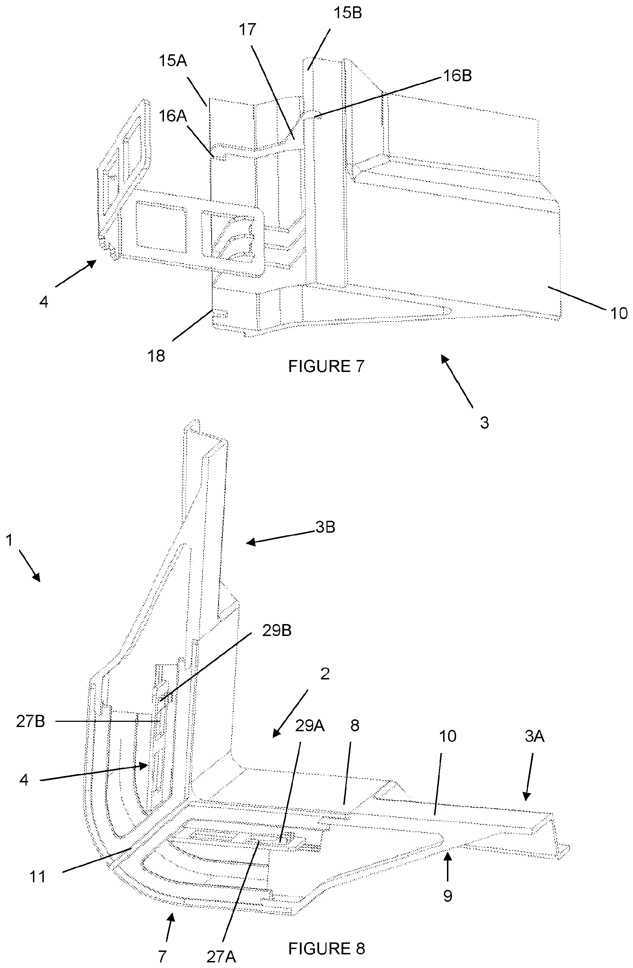

With the fastener (4) in this position, the longitudinal edges (15) of two sidewalls (3) can be slid into the complementary grooves (5) formed by the edges of the pillar (2) on either side thereof. With the sidewall edges (15) pushed fully into position the hooks (29) in the sidewall edges (15) are positioned behind and aligned with the fastener tabs (26). Rotation of the cap screw (21) moves the fastener (4) along its engagement path from the disengaged position to the engaged position. A shown in Figure 7, with movement of the fastener (4) along the engagement path the closed aperture (27) of each tab (26) engages its respective set off hook formations (29), in the sidewall (3) on that side of the pillar (2).

As shown in Figure 8, the 45-degree alignment of the engagement path relative to the sliding path of the sidewalls (3) into the pillar (2) ensures that the sidewalls (3) of the two panels (3A, 3B) are fully pulled into the groove (5) provided by the longitudinal edges of the pillar (2). Once the sidewalls (3) are completely in abutment with the pillar (2), the fastener (4) is in its engaged position. The plastics material of which the fastener (4) is manufactured allows a degree of deformation of the fastener (4) when it is moved into the engaged position. This ensures that the hook formations (29) are under tension which resists relative movement between the sidewalls (3) and the pillar (2).

The plurality of fasteners (4) along the length of the pillar (2) are all progressively moved from their respective disengaged to engaged positions, with a final tightening of the cap screws (21) of each ensuring that equal tension is applied along the length off the pillar (2) onto the longitudinal edges (15) of both sidewalls (3) engaged with it.

This provides a sturdy structure, which is easy to assemble and less susceptible to unwanted movement then what is possible with conventional rivets through apertures. Since the fastener is located internally with only the head of the cap screw visibly in its aperture, it is effectively concealed, and the appearance of the structure constructed from it is not diminished by the fastening system.

The assembly of a structure using this fastening system (1) is much quicker compared to rivets used in conventional systems and it requires no more than an Allen key for the caps screws (21). This fastening system (1) also allows the structure formed by it, in this embodiment a portable toilet, to be disassembled simply by moving the fasteners (4) from their engaged to their disengaged positions. The easy assembly and disassembly allow structures that use this fastening system to be flat packed and transported disassembled in bulk.

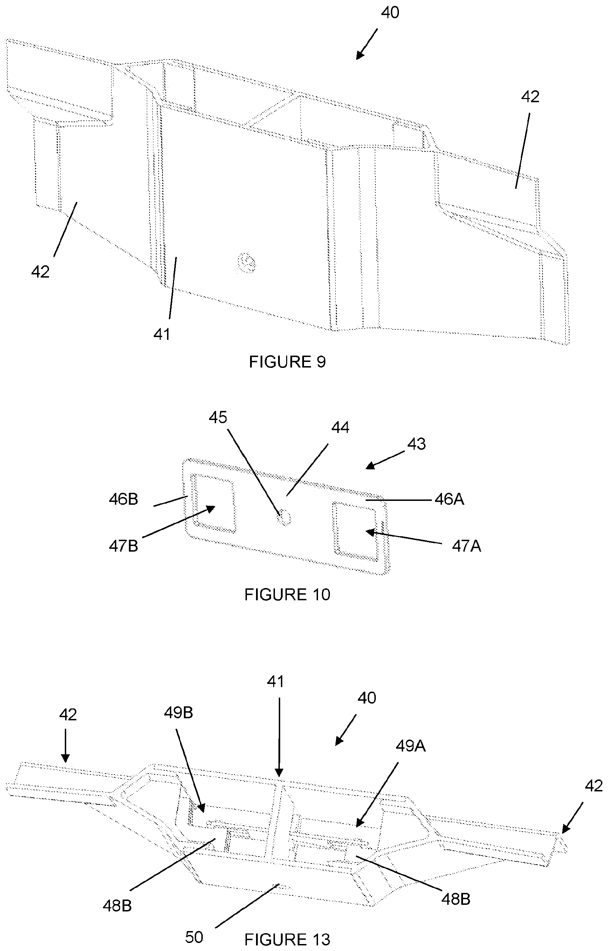

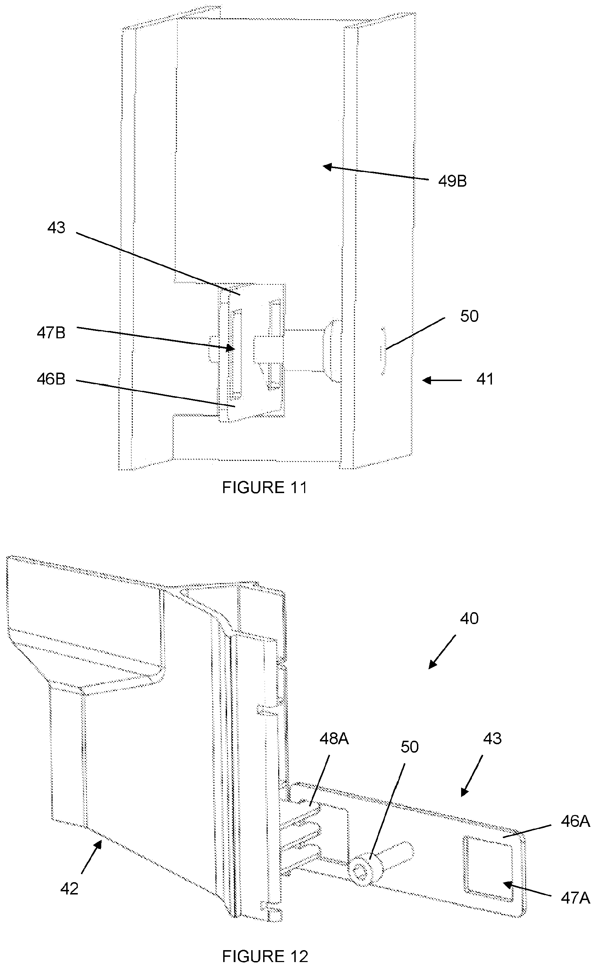

The invention is not limited to a system that requires a corner pillar (2). As shown in Figures 9 to 13 the fastening system of the invention includes a second embodiment (40) which can be used on a pillar (41) from which sidewalls (42) extend away from each other. This pillar (41) is therefore not a corner pillar but rather a side wall pillar. This would be useful in an instance where, for example, a structure is created that does not have a square plan but for example has a rectangular plan. That would for example include a tool shed.

In this second embodiment (40) the fastener (43) comprises a base (44) with a central aperture (45), which extends on its sides into two tabs (46A, 46B). The tabs (46) are provided with closed apertures (47A, 47B) which in use engage hook formations (48A, 48B) extending from the longitudinal edges of sidewalls (42).

In this second embodiment, the engagement path of the fastener (43) is at a right angle to the sliding path of the sidewalls (42) into the grooves (49A, 49B) provided by the longitudinal edges of the pillar (41). Even though this limits the extent by which movement of the fastener (43) from its disengaged to its engaged position will pull the sidewalls (42) into the grooves (49) of the pillar (41), the nature of the plastics material of which the fastener (43) is manufactured does allow some tension to be placed on the hook formations (48) of the sidewalls (42). Tightening of the cap screw (50) with the fastener (43) engaged over the hook formations (48) causes some deformation of the fastener (43), which tensions the hook formations (48) and draws the sidewalls (42) fully into the grooves (49) of the pillar (41).

It will be appreciated that the embodiments described above are given by way of example only and are not intended to limit the scope of the invention. It is possible to alter aspects of the embodiments without departing from the essence of the invention.

It is for example possible to provide the passage (20) through the internal surface of the pillar (2) and reverse the direction in which the hooks (29) face, to reverse the direction of the engagement path of the fastener (4). This will result in a 'push' engagement instead of a 'pull' engagement, but it is expected to still function.

It is also possible for the fastener to be provided with hooks and the sidewall with an engagement formation in the form of an aperture, extending for example from a tab. Further alternatively, a set of complimentary engaging hooks can be provided on both the fastener and the sidewall.

The fastener may also be manufactured from a non-plastic material, such as for example spring steel.

## Claims

1. A concealed structural element fastening system (1) comprising a first structural element (2), a second structural element (3) and a fastener; with the first structural element being provided with a longitudinal groove (5) along an edge thereof, the second structural element (3) being provided with a longitudinal edge (6) that is complimentary shaped and sized at least partially to fit into the groove (5), to provide the first structural element (2) and the second structural element (3) with a sliding fit to each other, and the fastener (4) is configured to guide engagement of the first structural element (2) and the second structural element (3) and to secure the first structural element (2) and the second structural element (3) to, and in abutment with, each other;
with the fastener (4) including a fastener guide (24, 25) configured to movably secure the fastener (4) to the first structural element and guide movement of the fastener (4) along a fixed engagement path (19B, 19C) forming part of the first structural element (2) between a disengaged position and an engaged position;
with the fastener (4) including an engagement formation (26) that is complimentary configured to an engagement formation (29) on the second structural element (3);
***characterised in that**:*
the concealed structural element fastening system (1) furthermore comprises a screw threaded bolt (21);
the first structural element (2) is comprised of an operatively outer wall (7) and an operatively inner wall (8), spaced apart by an internal wall (11) extending between them, and with the inner and outer walls forming between them the longitudinal groove (5) along an edge (6) of the first structural element (2),
the internal wall (11) includes for each fastener an aperture (19) in the internal wall,
a passage (20) extends from an edge of each aperture (19) to and through the first structural element wall (7, 8) closest to it;
the passage (20) is shaped and sized to allow the screw threaded bolt (21) to extend through the wall (7, 8) through which the passage (20) extends into the aperture (19) in the internal wall (11) of the first structural element (2),
the fastener (4) includes a base (22) with an aperture (23) complementary shaped to the shaft of the bolt (21) and is screw-threaded complementary to the bolt (21),
the fastener guide (24, 25) comprises a set of spaced apart protrusions on an operatively top edge and operatively bottom edge of the fastener (4), and each set of protrusions defines between them a guide gap (24A, 25A) for the fastener (4) to have a top guide gap (24A) and a bottom guide gap (25A),
the top and bottom guide gaps (24A, 25A) are complimentary shaped and sized to a thickness of the internal wall (11) of the first structural element (2) at operatively upper and lower edges of the aperture in the internal wall, with the upper and lower edges of the aperture (19) forming the engagement path;
the fastener (4) is installed in the aperture (19) in the internal wall (11) in screw-threaded engagement with the bolt (21), and the top and bottom guide gaps (24A, 25A) of the fastener (4) are located in sliding engagement with operatively upper and lower edges of the aperture (19) in the internal wall (11) which provide the engagement path (19B, 19C) to allow sliding movement of the fastener (4) along the operatively upper and lower edges of the aperture (19) in the internal wall (11) guided by the top and bottom guide gaps (24A, 25A) of the fastener (4) along the engagement path (19B, 19C);
rotation of the bolt (21) moves the fastener (4) between its disengaged position distal from the bolt passage and its engaged position proximate the bolt passage;
the fastener (4) further includes a set of side tabs (26A, 26B) each terminating in an engagement formation (27A, 27B) that is complementary shaped and sized to an associated engagement formation (29A, 29B) of the second structural element (3); operatively for movement of the fastener (4) from its disengaged position towards its engaged position to align and engage the engagement formation (27A, 27B) of each tab (26A, 26B) of the fastener (4) with an associated complimentary engagement formation (29A, 29B) within its associated second structural element (3), and with movement of the fastener (4) to its engaged position securing the second structural element (3) to the first structural element (2) by drawing it into the groove (5) under force of the engagement of the associated engagement formations (27A and 29A, 27B and 29B).

2. A system as claimed in claim 1 in which the engagement formation of each of the fastener side tabs comprises an aperture (27A, 27B) through the tab (26A, 26B), and the engagement formation of the second structural element (3) comprises a hook (29A, 29B).

3. A system as claimed in claim 1 in which the engagement formation of each of the fastener side tabs comprises a hook extending from the tab, and the engagement formation of the second structural element comprises an aperture in a tab extending from the second structural element (3).

4. A system as claimed in claim 1 in which the passage (20) extends through the outer wall (7) of the first structural element (2).

5. A system as claimed in claim 4 in which the first and second structural elements (2, 3) include a sliding fit guide comprising a set of spaced apart ribs on one of the first and second structural elements (2, 3), and a set of complementary notches on the other, with the ribs and notches guiding sliding of the edge of the second structural element (3) into the groove of the first structural element (2).

6. A system as claimed in claim 5 in which the first structural element comprises a pillar (2) of a structure and the second structural element comprises a panel(3) of the structure.

7. A system as claimed in claim 6 in which the pillar comprises a corner pillar (2) of the structure and the panel comprises a wall (3) of the structure.

8. A system as claimed in claim 6 or 7 in which each pillar (2) provides fitment of a panel (3) on either longitudinal side thereof.

9. A concealed structural element fastening system (40) comprising a first structural element, a second structural element and a fastener; the first structural element being provided with a longitudinal groove along an edge thereof, the second structural element being provided with a longitudinal edge complimentary shaped and sized at least partially to fit into the groove, to provide the first structural element and the second structural element with a sliding fit to each other, and the fastener (43) is configured to guide engagement of the first structural element and the second structural element and to secure the first structural element (41) and the second structural element (42) to, and in abutment with, each other;
with the fastener (43) including a fastener guide configured to movably secure the fastener (43) to the first structural element (41) and guide movement of the fastener (43) along a fixed engagement path between a disengaged position and an engaged position;
with the fastener (43) including an engagement formation (47) complimentary configured to an engagement formation (48) on the second structural element (42); ***characterised in that**:*
the concealed structural element fastening system (1) furthermore comprises a screw threaded bolt (50);
the first structural element (41) is comprised of an operatively outer wall and an operatively inner wall, spaced apart by an internal wall extending between them, and with the inner and outer walls forming between them the longitudinal groove along an edge of the first structural element (41),
the internal wall includes for each fastener an aperture in the internal wall,
a passage extends from an edge of each aperture to and through the first structural element (41) wall closest to it;
the passage is shaped and sized to allow the screw threaded bolt (50) to extend through the wall through which the passage extends into the aperture in the internal wall of the first structural element (41),
the fastener (43) is comprised of a resiliently deformable material, and it includes a base (44) with an aperture (45) complementary shaped to the shaft of the bolt (50) and is screw-threaded complementary to the bolt (50),
the fastener guide comprises the aperture (45) in the fastener base (44),
the fastener (43) is installed in the aperture in the internal wall in screw-threaded engagement with the bolt (50), and the shaft of the bolt (50) extends through the fastener guide to provide the engagement path for the fastener (43);
the fastener (43) further includes a set of side tabs (46A, 46B) each terminating in an engagement formation (47) that is complementary shaped and sized to an associated engagement formation (48) of the second structural element (42);
rotation of the bolt (50) applies a force to the fastener (43) through its base (44) which resiliently deforms the resiliently deformable material of the fastener (43) to move the fastener (43) between its disengaged position distal from the bolt passage and its engaged position proximate the bolt passage, and by means of the engagement formations (47) to apply tension to the engagement formation (48) of the second structural element (42);
operatively for movement of the fastener (43) from its disengaged position towards its engaged position to secure the second structural element (42) to the first structural element (41) by drawing the edge of the second structural element (42) into the groove of the first structural element (41) under force of the engagement of the associated engagement formations (47, 48).

10. A system as claimed in claim 9 in which the first structural element comprises a pillar (41) of a structure and the second structural element comprises a panel (42) of the structure.

11. A system as claimed in claim 10 in which the pillar comprises a pillar (41) of the structure and the panel comprises a wall (42) of the structure.

12. A system as claimed in claim 10 or 11 in which each pillar (41) provides fitment of a panel (42) on either longitudinal side thereof.

## Patentansprüche

1. Verdecktes Strukturelementbefestigungssystem (1), umfassend ein erstes Strukturelement (2), ein zweites Strukturelement (3) und ein Befestigungselement, wobei das erste Strukturelement entlang einer Kante davon mit einer Längsnut (5) versehen ist, das zweite Strukturelement (3) mit einer Längskante (6) versehen ist, die mindestens teilweise komplementär geformt und dimensioniert ist, um in die Nut (5) zu passen, um das erste Strukturelement (2) und das zweite Strukturelement (3) mit einer Gleitpassung zueinander zu versehen, und das Befestigungselement (4) dazu konfiguriert ist, den Eingriff des ersten Strukturelements (2) und des zweiten Strukturelements (3) zu führen und das erste Strukturelement (2) und das zweite Strukturelement (3) aneinander und in Anlage miteinander zu sichern;
wobei das Befestigungselement (4) eine Befestigungselementführung (24, 25) beinhaltet, die dazu konfiguriert ist, das Befestigungselement (4) beweglich an dem ersten Strukturelement zu sichern und die Bewegung des Befestigungselements (4) entlang eines festen Eingriffswegs (19B, 19C) zu führen, der Bestandteil des ersten Strukturelements (2) zwischen einer Nichteingriffsposition und einer Eingriffsposition bildet;
wobei das Befestigungselement (4) eine Eingriffsformation (26) beinhaltet, die komplementär zu einer Eingriffsformation (29) auf dem zweiten Strukturelement (3) konfiguriert ist;
***dadurch gekennzeichnet, dass**:*
das verdeckte Strukturelementbefestigungssystem (1) weiterhin einen Schraubgewindebolzen (21) umfasst;
das erste Strukturelement (2) aus einer funktionellen äußeren Wand (7) und einer funktionellen inneren Wand (8) besteht, die durch eine sich zwischen ihnen erstreckende interne Wand (11) beabstandet sind, und wobei die innere und äußere Wand zwischen ihnen die Längsnut (5) entlang einer Kante (6) des ersten Strukturelements (2) bilden,
die interne Wand (11), für jedes Befestigungselement, eine Apertur (19) in der internen Wand beinhaltet,
sich ein Durchgang (20) von einer Kante jeder Apertur (19) zu der und durch die ihr am nächsten gelegene erste Strukturelementwand (7, 8) erstreckt;
der Durchgang (20) so geformt und dimensioniert ist, dass sich der Schraubgewindebolzen (21) durch die Wand (7, 8) erstrecken kann, durch die sich der Durchgang (20) in die Apertur (19) in der internen Wand (11) des ersten Strukturelements (2) erstreckt,
das Befestigungselement (4) eine Basis (22) mit einer Apertur (23) beinhaltet, die komplementär zu dem Schaft des Bolzens (21) geformt ist und ein zu dem Bolzen (21) komplementäres Schraubgewinde aufweist,
die Befestigungselementführung (24, 25) einen Satz von beabstandeten Vorsprüngen an einer funktionellen Oberkante und einer funktionellen Unterkante des Befestigungselements (4) umfasst und jeder Satz von Vorsprüngen zwischen ihnen einen Führungsspalt (24A, 25A) für das Befestigungselement (4) definiert, sodass dieses einen oberen Führungsspalt (24A) und einen unteren Führungsspalt (25A) aufweist,
der obere und untere Führungsspalt (24A, 25A) komplementär zu einer Dicke der internen Wand (11) des ersten Strukturelements (2) an der funktionellen Ober- und Unterkante der Apertur in der internen Wand geformt und dimensioniert sind, wobei die Ober- und Unterkante der Apertur (19) den Eingriffsweg bilden;
das Befestigungselement (4) in der Apertur (19) in der internen Wand (11) in Schraubgewindeeingriff mit dem Bolzen (21) installiert ist und der obere und untere Führungsspalt (24A, 25A) des Befestigungselements (4) sich in Gleiteingriff mit der funktionellen Ober- und Unterkante der Apertur (19) in der internen Wand (11) befinden, die den Eingriffsweg (19B, 19C) bereitstellen, um eine Gleitbewegung des Befestigungselements (4) entlang der funktionellen Ober- und Unterkante der Apertur (19) in der internen Wand (11) zu erlauben, die von dem oberen und unteren Führungsspalt (24A, 25A) des Befestigungselements (4) entlang des Eingriffswegs (19B, 19C) geführt werden;
Drehung des Bolzens (21) das Befestigungselement (4) zwischen seiner Nichteingriffsposition distal von dem Bolzendurchgang und seiner Eingriffsposition nahe dem Bolzendurchgang bewegt;
das Befestigungselement (4) ferner einen Satz von Seitenlaschen (26A, 26B) beinhaltet, die jeweils in einer Eingriffsformation (27A, 27B) enden, die komplementär zu einer assoziierten Eingriffsformation (29A, 29B) des zweiten Strukturelements (3) geformt und dimensioniert ist;
operativ für die Bewegung des Befestigungselements (4) von seiner Nichteingriffsposition hin zu seiner Eingriffsposition, um die Eingriffsformation (27A, 27B) jeder Lasche (26A, 26B) des Befestigungselements (4) mit einer assoziierten komplementären Eingriffsformation (29A, 29B) innerhalb seines assoziierten zweiten Strukturelements (3) auszurichten und in Eingriff zu bringen, und wobei eine Bewegung des Befestigungselements (4) in seine Eingriffsposition das zweite Strukturelement (3) an dem ersten Strukturelement (2) sichert, indem es kraft des Eingriffs der assoziierten Eingriffsformationen (27A und 29A, 27B und 29B) in die Nut (5) gezogen wird.

2. System nach Anspruch 1, wobei die Eingriffsformation jeder der Befestigungselement-Seitenlaschen eine Apertur (27A, 27B) durch die Lasche (26A, 26B) umfasst und die Eingriffsformation des zweiten Strukturelements (3) einen Haken (29A, 29B) umfasst.

3. System nach Anspruch 1, wobei die Eingriffsformation jeder der Befestigungselement-Seitenlaschen einen sich von der Lasche erstreckenden Haken umfasst und die Eingriffsformation des zweiten Strukturelements eine Apertur in einer sich von dem zweiten Strukturelement (3) erstreckenden Lasche umfasst.

4. System nach Anspruch 1, wobei sich der Durchgang (20) durch die äußere Wand (7) des ersten Strukturelements (2) erstreckt.

5. System nach Anspruch 4, wobei das erste und zweite Strukturelement (2, 3) eine Gleitpassungsführung beinhalten, die einen Satz von beabstandeten Rippen auf einem des ersten und zweiten Strukturelements (2, 3) und einen Satz von komplementären Kerben an dem anderen umfasst, wobei die Rippen und Kerben das Gleiten der Kante des zweiten Strukturelements (3) in die Nut des ersten Strukturelements (2) führen.

6. System nach Anspruch 5, wobei das erste Strukturelement eine Säule (2) einer Struktur umfasst und das zweite Strukturelement eine Platte (3) der Struktur umfasst.

7. System nach Anspruch 6, wobei die Säule eine Ecksäule (2) der Struktur umfasst und die Platte eine Wand (3) der Struktur umfasst.

8. System nach Anspruch 6 oder 7, wobei jede Säule (2) den Einbau einer Platte (3) an einer der beiden Längsseiten davon vorsieht.

9. Verdecktes Strukturelementbefestigungssystem (40), umfassend ein erstes Strukturelement, ein zweites Strukturelement und ein Befestigungselement; wobei das erste Strukturelement mit einer Längsnut entlang einer davon Kante versehen ist, das zweite Strukturelement mit einer Längskante versehen ist, die mindestens teilweise komplementär geformt und dimensioniert ist, um in die Nut zu passen, um das erste Strukturelement und das zweite Strukturelement mit einer Gleitpassung zueinander zu versehen, und das Befestigungselement (43) dazu konfiguriert ist, den Eingriff des ersten Strukturelements und des zweiten Strukturelements zu führen und das erste Strukturelement (41) und das zweite Strukturelement (42) aneinander und in Anlage miteinander zu sichern;
wobei das Befestigungselement (43) eine Befestigungselementführung beinhaltet, die dazu konfiguriert ist, das Befestigungselement (43) beweglich an dem ersten Strukturelement (41) zu sichern und die Bewegung des Befestigungselements (43) entlang eines festen Eingriffswegs zwischen einer Nichteingriffsposition und einer Eingriffsposition zu führen;
wobei das Befestigungselement (43) eine Eingriffsformation (47) beinhaltet, die komplementär zu einer Eingriffsformation (48) auf dem zweiten Strukturelement (42) konfiguriert ist;
***dadurch gekennzeichnet, dass**:*
das verdeckte Strukturelementbefestigungssystem (1) weiterhin einen Schraubgewindebolzen (50) umfasst;
das erste Strukturelement (41) aus einer funktionellen äußeren Wand und einer funktionellen inneren Wand besteht, die durch eine sich zwischen ihnen erstreckende interne Wand beabstandet sind, wobei die innere und äußere Wand zwischen ihnen die Längsnut entlang einer Kante des ersten Strukturelements (41) bilden,
die interne Wand, für jedes Befestigungselement, eine Apertur in der internen Wand beinhaltet,
sich ein Durchgang von einer Kante jeder Apertur zu der und durch die ihr am nächsten gelegene erste Strukturelement- (41) Wand erstreckt;
der Durchgang so geformt und dimensioniert ist, dass sich der Schraubgewindebolzen (50) durch die Wand erstrecken kann, durch die sich der Durchgang in die Apertur in der internen Wand des ersten Strukturelements (41) erstreckt,
das Befestigungselement (43) aus einem elastisch verformbaren Material besteht und es eine Basis (44) mit einer Apertur (45) beinhaltet, die komplementär zu dem Schaft des Bolzens (50) geformt ist und ein zu dem Bolzen (50) komplementäres Schraubgewinde aufweist,
die Befestigungselementführung die Apertur (45) in der Befestigungselementbasis (44) umfasst,
das Befestigungselement (43) in der Apertur in der internen Wand in Schraubgewindeeingriff mit dem Bolzen (50) installiert ist und sich der Schaft des Bolzens (50) durch die Befestigungselementführung erstreckt, um den Eingriffsweg für das Befestigungselement (43) bereitzustellen;
das Befestigungselement (43) ferner einen Satz von Seitenlaschen (46A, 46B) beinhaltet, die jeweils in einer Eingriffsformation (47) enden, die komplementär zu einer assoziierten Eingriffsformation (48) des zweiten Strukturelements (42) geformt und dimensioniert ist;
Drehung des Bolzens (50) eine Kraft auf das Befestigungselement (43) durch dessen Basis (44) ausübt, die das elastisch verformbare Material des Befestigungselements (43) elastisch verformt, um das Befestigungselement (43) zwischen seiner Nichteingriffsposition distal von dem Bolzendurchgang und seiner Eingriffsposition nahe dem Bolzendurchgang zu bewegen und mittels der Eingriffsformationen (47) eine Spannung auf die Eingriffsformation (48) des zweiten Strukturelements (42) auszuüben;
operativ für die Bewegung des Befestigungselements (43) von seiner Nichteingriffsposition hin zu seiner Eingriffsposition, um das zweite Strukturelement (42) an dem ersten Strukturelement (41) zu sichern, indem die Kante des zweiten Strukturelements (42) kraft des Eingriffs der assoziierten Eingriffsformationen (47, 48) in die Nut des ersten Strukturelements (41) gezogen wird.

10. System nach Anspruch 9, wobei das erste Strukturelement eine Säule (41) einer Struktur umfasst und das zweite Strukturelement eine Platte (42) der Struktur umfasst.

11. System nach Anspruch 10, wobei die Säule eine Säule (41) der Struktur umfasst und die Platte eine Wand (42) der Struktur umfasst.

12. System nach Anspruch 10 oder 11, wobei jede Säule (41) den Einbau einer Platte (42) an einer der beiden Längsseiten davon vorsieht.

## Revendications

1. Système de fixation dissimulé pour éléments structurels (1) comprenant un premier élément structurel (2), un second élément structurel (3) et une fixation ; le premier élément structurel étant doté d'une rainure longitudinale (5) située le long d'un bord de celui-ci, le second élément structurel (3) étant doté d'un bord longitudinal (6) qui est complémentairement configuré et dimensionné, au moins en partie, pour venir s'encastrer dans la rainure (5), afin d'assurer un ajustement coulissant entre le premier élément structurel (2) et le second élément structurel (3), et la fixation (4) est configurée pour guider la mise en prise du premier élément structurel (2) et du second élément structurel (3) et pour fixer le premier élément structurel (2) et le second élément structurel (3) l'un à l'autre et les amener en butée l'un contre l'autre ;
la fixation (4) comportant un guide de fixation (24, 25) configuré pour fixer de façon mobile la fixation (4) au premier élément structurel et pour guider le déplacement de la fixation (4) le long d'une trajectoire de mise en prise fixe (19B, 19C) qui fait partie du premier élément structurel (2) entre une position Hors prise et une position En prise ;
la fixation (4) comportant une formation de mise en prise (26) qui est complémentairement configurée sur une formation de mise en prise (29) sur le second élément structurel (3) ;
***caractérisé en ce que** :*
le système de fixation dissimulé pour éléments structurels (1) comprend en outre un boulon fileté (21) ;
le premier élément structurel (2) comporte une paroi externe opérationnelle (7) et une paroi interne opérationnelle (8), situées à distance l'une de l'autre par une paroi intérieure (11) les séparant, les parois interne et externe formant entre elles la rainure longitudinale (5) le long d'un bord (6) du premier élément structurel (2),
la paroi intérieure (11) comporte une ouverture (19) assignée à chaque fixation de la paroi intérieure (11),
un passage (20) part d'un bord de chaque ouverture (19) jusqu'à hauteur de la paroi du premier élément structurel (7, 8) la plus proche et la traverse ;
le passage (20) est configuré et dimensionné de sorte à permettre le boulon fileté (21) de traverser la paroi (7, 8) à travers de laquelle le passage (20) s'étend dans l'ouverture (19) dans la paroi intérieure (11) du premier élément structurel (2),
la fixation (4) comporte une base (22) dotée d'une ouverture complémentairement configurée sur la tige du boulon (21) et est filetée complémentairement sur le boulon (21),
le guide de fixation (24, 25) comporte un ensemble de saillies espacées l'une de l'autre sur un bord supérieur opérationnel et un bord inférieur opérationnel de la fixation (4), et chaque ensemble de saillies définit entre elles un espace de guidage (24A, 25A) assurant à la fixation (4) un espace de guidage supérieur (24A) et un espace de guidage inférieur (25A),
les espaces de guidage supérieur et inférieur (24A, 25A) sont complémentairement configurés et dimensionnés sur une épaisseur de la paroi intérieure (11) du premier élément structurel (2) à hauteur des bords supérieur et inférieur opérationnels de l'ouverture de la paroi intérieure, les bords supérieur et inférieur de l'ouverture (19) formant la trajectoire de mise en prise ;
la fixation (4) est installée dans l'ouverture (19) dans la paroi intérieure (11) dans une mise en prise filetée avec le boulon (21), et les espaces de guidage supérieur et inférieur (24A, 25A) de la fixation (4) sont situés dans une mise en prise coulissante avec les bords supérieur et inférieur opérationnels de l'ouverture (19) dans la paroi intérieure (11) qui fournit la trajectoire de mise en prise (19B, 19C), afin de permettre à la fixation (4) de coulisser le long des bords supérieur et inférieur opérationnels de l'ouverture (19) dans la paroi intérieure (11) que guident les espaces de guidage supérieur et inférieur (24A, 25A) de la fixation (4) le long de la trajectoire de mise en prise (19B, 19C) ;
la rotation du boulon (21) déplace la fixation (4) entre la position Hors prise, distale du passage du boulon et sa position en prise à proximité du passage du boulon ;
la fixation (4) comprend en outre un ensemble de languettes latérales (26A, 26B), se terminant chacun dans une formation de mise en prise (27A, 27B) qui est complémentairement configurée et dimensionnée sur une formation de mise en prise associée (29A, 29B) du second élément structurel (3) ; fonctionnellement pour permettre le positionnement de la fixation (4) de sa position Hors prise sur sa position En prise pour aligner et enclencher la formation de mise en prise (27A, 27B) de chaque languette (26A, 26B) de la fixation (4) avec une formation de mise en prise complémentaire associée (3) ; et le positionnement de la fixation (4) sur sa position En prise fixant le second élément structurel (3) au premier élément structurel (2) en le tirant dans la rainure (5) sous l'effet de la mise en prise des formations de mise en prise associées (27A et 29A, 27B et 29B).

2. Système selon la revendication 1, dans lequel la formation de mise en prise de chaque languette latérale de la fixation comprend une ouverture (27A, 27B) dans la languette (26A, 26B), et la formation de mise en prise du second élément structurel (3) comporte un crochet (29A, 29B).

3. Système selon la revendication 1, dans lequel la formation de mise en prise de chaque languette latérale de la fixation comprend un crochet qui part de la languette, et la formation de mise en prise du second élément structurel comporte une ouverture située dans une languette partant du second élément structurel (3).

4. Système selon la revendication 1, dans lequel le passage (20) s'étend à travers la paroi externe (7) du premier élément structurel (2).

5. Système selon la revendication 4, dans lequel les premier et second éléments structurels (2, 3) comprennent un guide à ajustement coulissant comportant un ensemble de nervures espacées sur l'un des premier et second éléments structurels (2, 3), et un ensemble d'encoches complémentaires sur l'autre élément, les nervures et les encoches guidant le coulissement du bord du second élément structurel (3) dans la rainure du premier élément structurel (2).

6. Système selon la revendication 5, dans lequel le premier élément structurel comprend un pilier (2) d'une structure et le second élément structurel comprend un panneau (3) de la structure.

7. Système selon la revendication 6, dans lequel le pilier comprend un pilier d'angle (2) de la structure et le panneau comprend une paroi (3) de la structure.

8. Système selon soit la revendication 6, soit la revendication 7, dans lequel chaque pilier (2) assure le montage d'un panneau (3) de part et d'autre des côtés longitudinaux de celui-ci.

9. Système de fixation dissimulé pour éléments structurels (40) comprenant un premier élément structurel, un second élément structurel et une fixation ; le premier élément structurel étant doté d'une rainure longitudinale située le long d'un bord de celui-ci, le second élément structurel étant doté d'un bord longitudinal qui est complémentairement configuré et dimensionné, au moins en partie, pour venir s'encastrer dans la rainure, afin d'assurer un ajustement coulissant entre le premier élément structurel et le second élément structurel, et la fixation (43) est configurée pour guider la mise en prise du premier élément structurel et du second élément structure et pour fixer le premier élément structurel (41) et le second élément structurel (42) l'un à l'autre et les amener en butée l'un contre l'autre ;
la fixation (43) comportant un guide de fixation configuré pour fixer de façon mobile la fixation (43) au premier élément structurel (41) et pour guider le déplacement de la fixation (43) le long d'une trajectoire de mise en prise fixe entre une position Hors prise et une position En prise ;
la fixation (43) comportant une formation de mise en prise (47) qui est complémentairement configurée sur une formation de mise en prise (48) sur le second élément structurel (42) ;
***caractérisé en ce que** :*
le système de fixation dissimulé pour éléments structurels (1) comprend en outre un boulon fileté (50) ;
le premier élément structurel (41) comporte une paroi externe opérationnelle et une paroi interne opérationnelle, situées à distance l'une de l'autre par une paroi intérieure les séparant, les parois interne et externe formant entre elles la rainure longitudinale le long d'un bord du premier élément structurel (41),
la paroi intérieure comprend une ouverture assignée à chaque fixation dans la paroi intérieure (11),
un passage part d'un bord de chaque ouverture jusqu'à hauteur de la paroi du premier élément structurel (41) la plus proche et la traverse ;
le passage est configuré et dimensionné de sorte à permettre au boulon fileté (50) de traverser la paroi à travers de laquelle le passage s'étend dans l'ouverture dans la paroi intérieure du premier élément structurel (41),
la fixation (43), constitué d'un matériau élastiquement déformable, comporte une base (44) dotée d'une ouverture complémentairement configurée sur la tige du boulon (50) et est filetée complémentairement sur le boulon (50),
le guide de fixation comprend l'ouverture (45) située dans la base de la fixation (44),
la fixation (43) est installée dans l'ouverture dans la paroi intérieure dans une mise en prise filetée avec le boulon (50), et la tige du boulon (50) s'étend à travers le guide de fixation pour fournir la trajectoire de mise en prise de la fixation (43) ;
la fixation (43) comprend en outre un ensemble de languettes latérales (46A, 46B), se terminant chacune dans une formation de mise en prise (47) qui est complémentairement configurée et dimensionnée sur une formation de mise en prise associée (48) du second élément structurel (42) ;
la rotation du boulon (50) exerce une force sur la fixation (43) à travers sa base (44) qui, élastiquement déforme le matériau élastiquement déformable de la fixation (43) pour déplacer la fixation (43) entre sa position Hors prise, distale du passage du boulon, et sa position En prise à proximité du passage du boulon, et au moyen des formations de mise en prise (47) pour appliquer une tension sur la formation de mise en prise (48) du second élément structurel (42) ; fonctionnellement pour permettre le positionnement de la fixation (43) de sa position Hors prise sur sa position En prise pour fixer le second élément structurel (42) au premier élément structurel (41) en tirant le bord du second élément structurel (42) dans la rainure du premier élément structurel (41) sous l'effet de la mise en prise des formations de mise en prise associées (47, 48).

10. Système selon la revendication 9, dans lequel le premier élément structurel comprend un pilier (41) d'une structure et le second élément structurel comprend un panneau (42) de la structure.

11. Système selon la revendication 10, dans lequel le pilier comprend un pilier (41) de la structure et le panneau comprend une paroi (42) de la structure.

12. Système selon soit la revendication 10, soit la revendication 11, dans lequel chaque pilier (41) assure le montage d'un panneau (42) de part et d'autre des côtés longitudinaux de celui-ci.
